# EUROPÄISCHE PATENTSCHRIFT

(11) **EP 0 429 916 B1**
(45) Veröffentlichungstag und Bekanntmachung des Hinweises auf die Patenterteilung: **15.03.1995**
(21) Anmeldenummer: 90121423.9
(22) Anmeldetag: 08.11.1990
(51) Int. Cl.: H02G 3/22

(54) **Packstück für Leitungsdurchführungen**
Packing piece for conductor feed-throughs
Pièce de bourrage pour traversées de conducteurs

(30) Priorität: 20.11.1989 DE 8913702 U
(43) Veröffentlichungstag der Anmeldung: 05.06.1991
(73) Patentinhaber: ROXTEC AB, S-371 23 Karlskrona (SE)
(72) Erfinder: Wolff, Anton, Dipl.-Ing., D - 3492 Brakel-Gehrden (DE)
(74) Vertreter: Glawe, Delfs, Moll & Partner

(56) Entgegenhaltungen:
- DE-A- 3 624 900
- DE-A- 3 635 593
- GB-A- 2 186 443

## Beschreibung

Die Erfindung betrifft ein Packstück aus Kunststoffmaterial für Leitungsdurchführungen durch Wandöffnungen, das zwei Packstückteile mit einer auf der zum jeweils anderen Packstückteil gerichteten Seite angeordneten halbzylinderförmigen Ausnehmung aufweist, wobei im von diesen Ausnehmungen gebildeten Raum ein aus mindestens einem Stück bestehendes zylinderförmiges Packstückteil mit wesentlich geringerem Durchmesser als jener der halbzylinderförmigen Ausnehmungen angeordnet ist und der restliche Raum von einem Hohlzylinder ausgefüllt ist, der in Längsrichtung in zwei im wesentlichen gleiche Hohl-Halbzylinder geteilt ist, die aus mehreren voneinander lösbaren Schichten bestehen.

Packstücke dieser Art sind dazu bestimmt, im wesentlichen runde Leitungen wie elektrische Leitungen, Versorgungsleitungen, Entsorgungsleitungen, Wasserleitungen, Hydraulikleitungen usw. zu umschließen. Werden dann mehrere solcher Packstücke mit darin eingeschlossenen Leitungen nebeneinander und übereinander angeordnet, so erhält man eine rechteckige Anordnung von Packstücken mit dazwischen befindlichen Leitungen, die in eine entsprechende rechteckige Öffnung eingesetzt werden und dort so zusammengepreßt werden können, daß keine Zwischenräume mehr vorhanden sind. Auf diese Weise können die Leitungen wasserdicht und gasdicht durch eine Wand hindurchgeführt werden, die eine Betonwand oder ein Betonboden, eine Blechwand, eine Stahlwand oder dergleichen sein kann. Mit den entsprechenden Durchführungen erhält man auch eine Durchführung, die feuerbeständig, überdruckbeständig und beständig gegen Nagetierverbiß ist. Die Ausbreitung von Wasser, Feuer, Gasen, Nagetieren und dergleichen durch Wände kann auf diese Weise wirkungsvoll an den sonst bestehenden Schwachstellen, wo die Leitungen verlegt sind, verhindert werden. Dies ist besonders dort wichtig, wo sich viele Menschen aufhalten oder wo wertvolle Sachwerte geschützt werden sollen. Diese multifunktionalen Durchführungen haben auch den Vorteil, daß sie wieder auseinandergenommen werden können, wenn Leitungen ausgewechselt werden müssen, was z.B. bei Computerleitungen relativ häufig der Fall ist.

Obwohl sich vorbekannte Durchführungen als sehr wirkungsvoll erwiesen haben, haben viele von ihnen den Nachteil, daß praktisch für jeden Leitungsdurchmesser entsprechende Packstücke bereit gehalten werden müssen. Außerdem müssen sogenannte Füllstücke mit unterschiedlichen Seitenlängen vorrätig gehalten werden, die dort eingesetzt werden, wo keine oder noch keine Leitungen hindurchgeführt werden, damit die Öffnung vollständig mit Packstücken bzw. Füllstücken verschlossen werden kann. Es müssen dabei nicht nur sehr viele Packstücke für Leitungen mit unterschiedlichen Nenndurchmessern vorrätig gehalten werden. Selbst für Leitungen mit dem gleichen Nenndurchmesser reicht unter Umständen eine Packstückgröße nicht aus, da der Durchmesser einer Leitung über die gesamte Rolle bis zu 3 mm variieren kann.

Ähnliche Probleme, wie sie hier bei Packstücken mit rechteckigem oder quadratischem Querschnitt auftreten, sind auch bei Packstücken mit rundem oder ovalem oder sonstigem Querschnitt vorhanden, die z.B. einzeln in eine entsprechend geformte Durchführung, Schelle oder dergleichen eingesetzt werden sollen. Wenn im folgenden in erster Linie von quadratischem Querschnitt die Rede ist, so bedeutet dies keine Einschränkung der Erfindung auf solche Formen.

Bei einem vorbekannten Packstück der eingangs genannten Art (DE-A-36 35 593) sind die Schichten durch Zwischenräume voneinander getrennt; nur an einer der Stirnseiten des Packstücks hängen sie zusammen. Die Zwischenräume sind offenbar durch Gießen oder Stanzen hergestellt. Der Nachteil dieser Packstücke besteht in den Zwischenräumen, aufgrund derer nur eine beschränkte Druckfestigkeit zu erwarten ist. Auch Feuer dürfte sich durch diese Zwischenräume von der einen Seite des Packstücks zur anderen schnell ausbreiten. Wegen der großen Zahl der Schichten besteht auch die Gefahr, daß auf einer Seite der Öffnung vom Packstück eine Zahl von Schichten zur Anpassung an eine Leitung entfernt wird, die von der Zahl auf der gegenüberliegenden Seite verschieden ist, so daß ebenfalls Zwischenräume beim Zusammensetzen entstehen, die die Dichtwirkung gegen Druckgase und Schutzwirkung gegen Hindurchdringen von Feuer verringern.

Die Aufgabe der Erfindung besteht in der Schaffung eines Packstücks der eingangs genannten Art, mit dem trotz einfacher Montage eine gute und sichere Abdichtung bei vielseitiger Anwendbarkeit erhalten wird.

Die erfindungsgemäße Lösung besteht darin, daß die Schichten aufeinanderliegen und unterschiedliche Farbe haben.

Diese Merkmale sind beim Packstück der Entgegenhaltung nicht zu erzielen, da dieses offenbar aus einem einheitlichen Material hergestellt ist, was unterschiedliche Farben der Schichten verunmöglicht, wobei außerdem durch den Gießvorgang oder nachträgliches Stanzen die Schichten getrennt werden müssen, was bleibende Zwischenräume zwischen den Schichten mit sich bringt. Durch die unterschiedlichen Farben der Schichten kann man leicht zwischen verschiedenen Innendurchmessern unterschieden, wodurch die Montage erleichtert wird.

Ein solches Packstück ist zunächst völlig geschlossen, so daß es als Füllstück verwendet werden kann, d.h. an einer Stelle, an der keine Leitung durch die Wandöffnung hindurchgeführt werden soll. Andererseits kann das zylinderförmige Packstückteil herausgenommen werden, so daß Leitungen verlegt werden können, die den Durchmesser des zylinderförmigen Packstückteils haben. Es können aber auch Leitungen mit einem Durchmesser verlegt werden, die den Durchmesser der halbzylinderförmigen Ausnehmungen haben; in diesem Fall werden zylinderförmiges Packstückteil und die hohlzylinderförmigen Packstückteile nicht verwendet. Der wesentliche Vorteil besteht aber darin, daß auch alle Zwischengrößen von Leitungen verlegt werden können, indem innen bei den Hohl-Halbzylindern die erforderliche Anzahl von Schichten gelöst wird, so daß die mittige Öffnung den Durchmesser annimmt, der für die Durchführung der Leitung erforderlich ist.

Es ist zwar bekannt, für Durchführungen aus mehreren Schichten aufgebaute Zwischenringe zu verwenden (GB-A-2 186 443). Ganz abgesehen davon, daß schwer vorstellbar ist, wie diese übereinander angeordneten Ringe wirkungsvoll und kostengünstig hergestellt und zusammengesetzt werden sollen, erstrecken sich diese Zwischenringe nicht über die gesamte Länge des Packstücks, so daß Räume zwischen und/oder vor und hinter den halbzylindrischen Aufnahmeausnehmungen freibleiben, die die abdichtenden, feuerhemmenden und sonstigen Wirkungen verschlechtern. Über die gesamte Länge des Packstücks sich erstreckende übereinandergestreifte Ringe wurden offenbar nicht vorgesehen, da solche Ringe nicht aufeinander zu stecken sind und die inneren Ringe dann nicht mehr herauszulösen sind.

Diese Probleme werden dadurch beseitigt, daß bei der Erfindung der entsprechende Hohlzylinder in Längsrichtung geteilt ist, so daß innere Schichten leicht entfernt werden können. Außerdem ist es nur mit der Anordnung der Erfindung möglich, an einer bereits verlegten und angeschlossenen Leitung die Durchführung vorzusehen; bei der Anordnung des Standes der Technik müßten die Ringe von einem Ende der Leitung bis an die Stelle der Durchführung geschoben werden, was sehr aufwendig wäre.

Bei einer Ausführungsform des erwähnten Standes der Technik ist zwar vorgesehen, daß die Ringe mit einem radialen Schlitz versehen sein können, so daß sie auch bei fertig verlegtem Kabel nachträglich über dasselbe geschoben werden können. Dabei ist aber offenbar nur an Anwendungen gedacht, bei denen geringere Anforderungen gestellt werden (siehe Seite 2, Zeilen 28 bis 32 der Entgegenhaltung). Es ist das Verdienst der Erfindung erkannt zu haben, daß auch mit vollständig in zwei gleiche Teile aufgeteilten Schichten eine Abdichtung auch in kritischen Fällen erreicht werden kann und daß durch dieses Auftrennen keine zusätzliche störende Undichtigkeit oder aber ein unerwünschtes Herausfallen von Schichten auftritt.

Die vorbekannte Ausführungsform mit einem Schlitz hat auch den Nachteil, daß die einzelnen Schichten auseinanderfallen können, wenn der Schlitz geöffnet wird, um die Schichten über das Kabel zu schieben. Dies ist insbesondere der Fall, wenn mehrfache Versuche unternommen werden müssen, bis die richtige Zahl von inneren zu entfernenden Schichten bestimmt ist. Dieses Problem tritt nicht auf, wenn erfindungsgemäß vorgesehen ist, daß die Schichten aus zwei getrennten Hälften bestehen, da dann keine Relativbewegung zwischen den Schichten beim Aufbiegen auftreten und außerdem die Zahl der zu entfernenden Schichten durch Einlegen des Kabels in eine nach oben offene zylinderförmige Rinne bestimmt werden kann.

Man könnte vielleicht auf den Gedanken kommen, man könnte ähnliche Wirkungen erhalten, indem man nur wenige Größen der äußeren Packstücke vorrätig hält und dann den eventuell verbleibenden Leerraum zwischen Leitung und Packstückinnenwand von Hand mit einem entsprechenden Band umwickelt. Hier ist es aber schwer, entsprechend gleichförmig zu wickeln, was bei den Packstücken der Erfindung durch maschinelles Wickeln erreicht werden kann. Insofern benötigen also die Packstücke der Erfindung weniger Erfahrung beim Verlegen bzw. ist es dem erfahrenen Verleger möglich, bessere Wirkungen zu erzielen.

Die Packstücke der Erfindung sind also zweckmäßiger, da weniger Größen hergestellt und auf Vorrat gehalten werden müssen. Obwohl im allgemeinen zumindest ein Teil des Packstücks vielschichtig aufgebaut ist, stören erstaunlicherweise die zusätzlichen Zwischenräume nicht, da ihre nachteilige Wirkung durch das erforderliche Zusammenpressen in der Durchführung verhindert wird. Im Falle eines Feuers expandieren die verwendeten Kunststoffmaterialien ohnehin, so daß die Dichtwirkung noch verbessert wird und die Materialien sogar das weich werdende Isolationsmaterial von Kabeln teilweise verdrängen, so daß hier auch im Fall eines Feuers eine sehr gute Gasdichtigkeit gewährleistet ist.

Das Packstück ist sehr einfach herzustellen, wenn der Hohlzylinder aus einem aufgewickelten Materialbahnabschnitt besteht. Sind Anfangs- und Endkante des Materialbahnabschnitts zickzackförmig, so erhält man hier keinen stufigen Übergang, der eine Undichtigkeit bewirken könnte.

Als besonders zweckmäßig haben sich Schichtdicken im Hohlzylinder von ungefähr 0,5 bis 2 mm erwiesen, wobei allerdings je nach Anwendungszweck und Leitungsdurchmesser auch größere oder kleinere Dicken zweckmäßig sein können.

Die Packstücke können erfindungsgemäß in beliebigen Längen hergestellt werden, insbesondere in Längen von 30 bis 500 mm oder länger.

Als besonders zweckmäßig hat sich eine Länge von ungefähr 50 bis 70 mm für die Packstücke erwiesen. Einerseits sind die Packstücke so nicht unnötig groß, gewähren aber andererseits doch die notwendige feuerhemmende Wirkung. Für besonders große Feuerbeständigkeit ist es zweckmäßiger, zwei Durchführungen hintereinander mit einem Zwischenraum vorzusehen, als entsprechend längere Packstücke zu verwenden.

Als zweckmäßig hat sich für das Kunststoffmaterial ein Elastomer erwiesen, insbesondere EPDM. Wenn das Kunststoffmaterial Beimengungen von Olefinen aufweist, so gleiten die Teile besser aufeinander, was die Montage erleichtert.

Es hat sich als zweckmäßig erwiesen, daß die äußeren Packstückteile und der zylinderförmige Packstückteil eine größere Shorehärte als der Materialbahnabschnitt aufweisen. Als besonders zweckmäßig hat sich herausgestellt, daß die äußeren Packstückteile und der zylinderförmige Packstückteil eine Shorehärte von ungefähr 60° bis 100°, vorzugsweise ungefähr 80° aufweisen, während für die Materialbahnabschnitte eine Shorehärte von ungefähr 40° bis 80°, vorzugsweise ungefähr 60° besonders zweckmäßig ist.

Das Packstück hat zweckmäßigerweise quadratischen Querschnitt, da es so besonders gut zum Aufnehmen von zylindrischen Leitungen geeignet ist. Leitungen mit nicht-zylindrischem Querschnitt können aber ebenfalls mit Hilfe des Packstücks verlegt werden.

Für die Dimensionen hat es sich als vorteilhaft erwiesen, daß der Durchmesser des zylinderförmigen Packstückteils ungefähr 15 bis 30 % der Seitenlänge des Quadrats beträgt, während die Wanddicke des hohlzylinderförmigen Packstückteils ungefähr 15 bis 25 % der Seitenlänge des Quadrats beträgt.

Als besonders zweckmäßig hat es sich erwiesen, wenn der Durchmesser des zylinderförmigen Packstückteils ungefähr 18 bis 25 % und die Wanddicke des hohlzylinderförmigen Packstückteils ungefähr 18 bis 22 % der Seitenlänge des Quadrats beträgt.

Bei diesen Dimensionen kommt man einerseits mit sehr wenig Packstückgrößen aus, während andererseits doch die optimale Abdichtung gesichert ist. Z.B. kann ein einziges Packstück für Leitungsdurchmesser von 4 bis 12 mm, das nächstgrößere für 12 bis 22 mm, das nächstgrößere für 22 bis 32 mm, das nächste für 32 bis 50 mm, das nächste für 50 bis 70 mm und das nächstgrößere für 70 bis 98 mm verwendet werden, wobei alle diese Packstücke, wenn der zylindrische Packstückteil nicht entfernt wird, auch als Füllstücke mit den entsprechenden Außendimensionen dienen können.

Die Packstücke werden dadurch hergestellt, daß die äußeren Packstückteile und das zylinderförmige Packstückteil extrudiert, kalibriert und ausgehärtet werden, daß auf das zylinderförmige Packstückteil der Materialbahnabschnitt aufgewickelt wird, daß die so gewonnene Einheit zwischen zwei äußeren Packstücken eingeschlossen wird und daß der gewickelte Hohlzylinder mit durch die Trennfuge der äußeren Packstückteile reichende Messer in zwei Teile geschnitten wird.

Nach dem Extrudieren werden die Packstückteile also zunächst kalibriert, d.h. auf genaue Dimensionen gebracht, z.B. durch Stauchen. Nach dem Aushärten in einem z.B. 20 m langen Aushärtungsbad erfolgt das Aufwickeln des Materialbahnabschnitts maschinell, zweckmäßigerweise vorspannungsfrei, da dann am Ort des später durchgeführten Trennschnitts keine Hohlräume entstehen. Dieses Schneiden erfolgt hochpräzise bis auf eine Genauigkeit von 1/10 mm, während das Packstück schon zusammengesetzt ist.

Zweckmäßigerweise werden die Packstücke zunächst in etwas größerer Länge als erforderlich hergestellt und dann nach den erwähnten Schritten durch einen Schneidvorgang auf die gewünschte Länge gebracht.

Die Packstücke können aber auch dadurch hergestellt werden, daß ein äußeren Packstücken entsprechender Strang extrudiert, kalibriert und ausgehärtet wird, daß in die holyzlinderförmige Ausnehmung mehrere Schichten von Materialbahnen übereinander angeordnet werden, die Fläche auf der Seite der Ausnehmung plangeschliffen wird, die Packstücke mit den Schichten vom Strang abgetrennt werden und zwischen je zwei aufeinandergelegte Packstücke ein extrudierter, kalibrierter, ausgehärteter und abgelängter zylindrischer Packstückteil eingelegt wird.

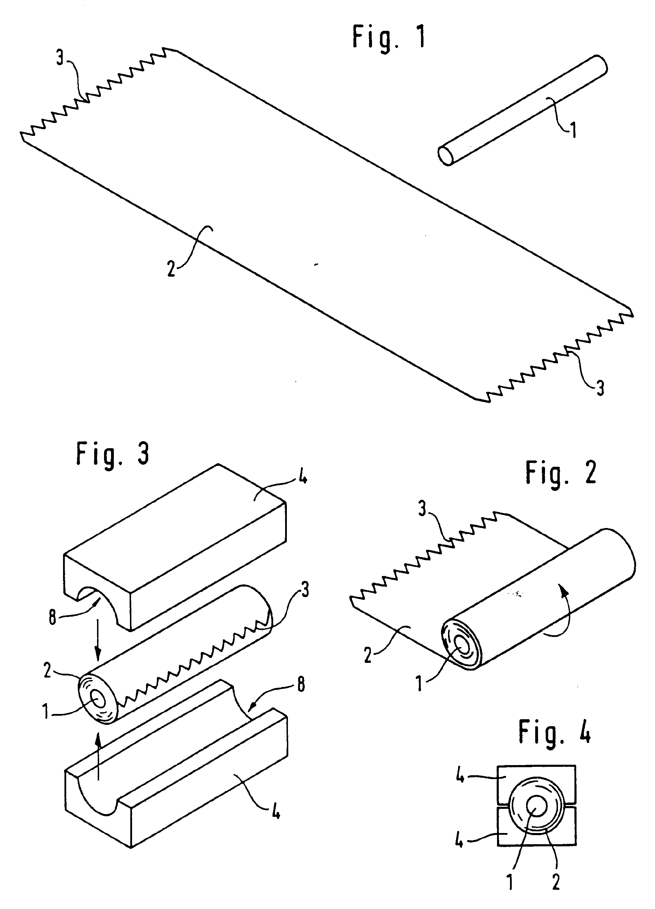

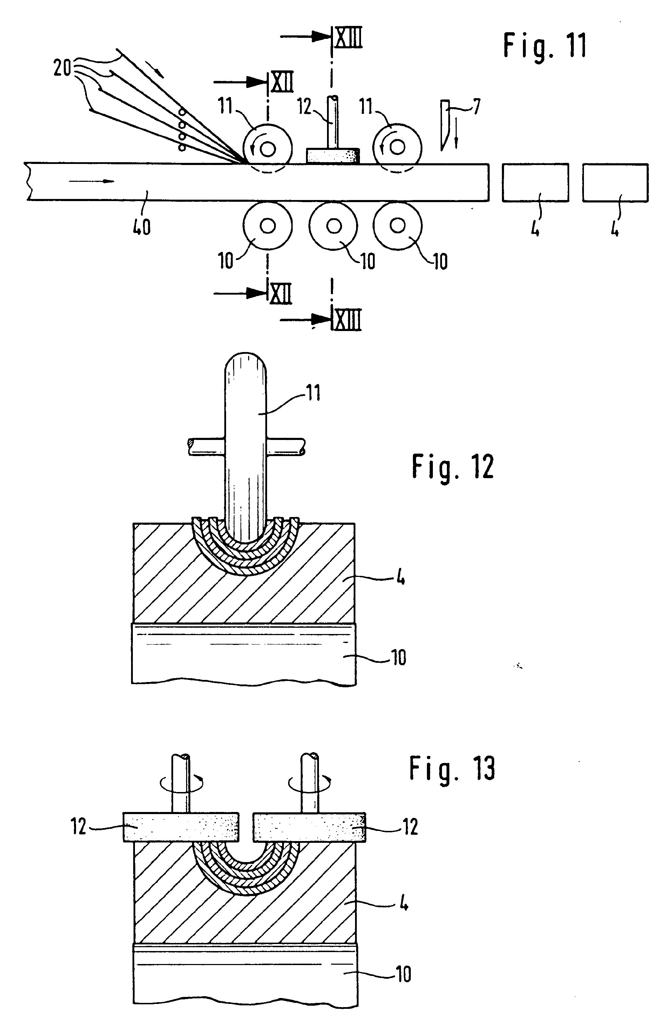

Die Erfindung wird im folgenden anhand einer vorteilhaften Ausführungsform unter Bezugnahme auf die beigefügten Zeichnungen beschrieben. Die Fig. 1 bis 10 zeigen verschiedene Schritte eines Herstellungsverfahrens sowie das Packstück selber, die Fig. 11-13 ein anderes Herstellungsverfahren.

In Fig. 1 ist ein zylinderförmiger Packstückteil 1 und eine Materialbahn 2 gezeigt, deren Endkanten 3 gezackt sind. Wie dies in Fig. 2 schematisch angedeutet ist, wird die Materialbahn 2 auf den zylinderförmigen Packstückteil 1 maschinell aufgewickelt. Der so fertiggestellte innere Teil, der aus den Teilen 1 und 2 besteht, wird zwischen die beiden äußeren Teile 4 verbracht (Fig. 3), so daß man die in Fig. 4 von der Stirnseite gezeigte Anordnung erhält. Diese äußeren Packstücke sind im wesentlichen quaderförmig, wobei ihre Höhe halb so groß ist wie die Breite. An ihren zueinander gerichteten Flächen weisen sie sich in Längsrichtung erstreckende halbzylinderförmige Ausnehmungen 8 auf, deren Krümmungsradius dem Krümmungsradius des darin einzuschließenden Teils entspricht.

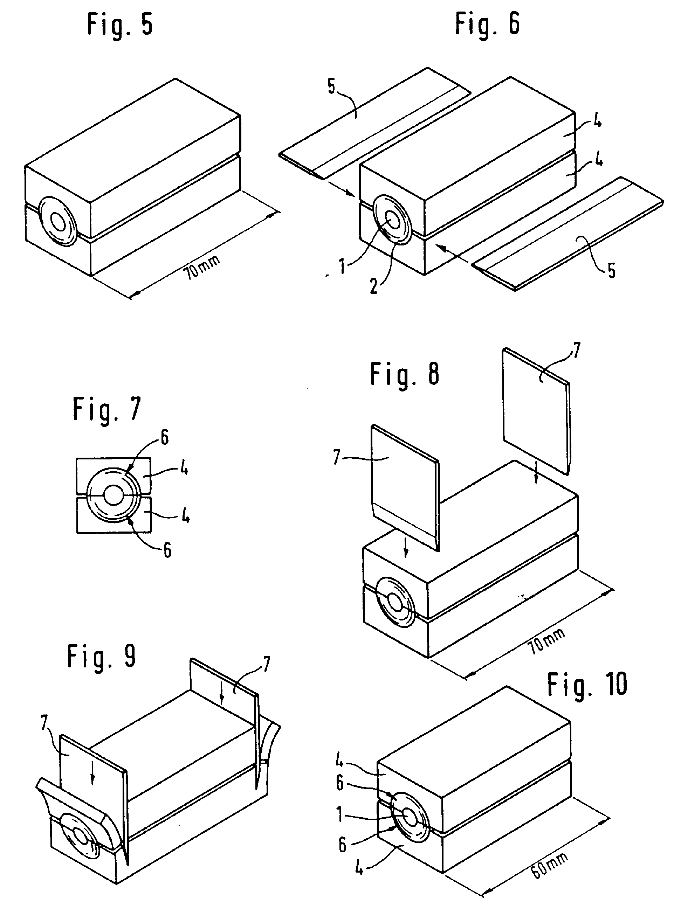

Fig. 5 zeigt das Packstück in perspektivischer Ansicht. Wie dies in Fig. 6 gezeigt ist, wird mit Hilfe von Messern 5 zwischen die Trennfugen der beiden Packstückteile 4 hindurch der aus der Materialbahn 2 bestehende Hohlzylinder durchschnitten, so daß man zwei Hohlzylinderteile 6 erhält, wie dies in Fig. 7 dargestellt ist. Anschließend erfolgt dann (Fig. 8) mit Messern 7 das Ablängen auf die gewünschte Länge, so daß das fertige Packstück (Fig. 10) genau die gewünschte Länge hat, wobei die angegebenen Längen von 70 mm für das Rohteil sowie von 60 mm für das fertige Packstück nur beispielsweise zu verstehen sind.

In den Fig. 11 bis 13 ist ein anderes Herstellungsverfahren gezeigt. Fig. 11 zeigt das Verfahren in einer Seitenansicht, während die Fig. 12 und 13 Detailansichten in Schnitten entlang den Linien XII-XII bzw. XIII-XIII von Fig. 11 zeigen. Bei diesem Verfahren wird zunächst ein Strang 40, aus dem die äußeren Packstücke 4 hergestellt werden sollen, in der gewünschten Form extrudiert, kalibriert und ausgehärtet. Dieser Strang wird dann zwischen Unterstützungsrollen 10 und Andruckrollen 11 hindurchgeleitet. Die Unterstützungsrollen 10 haben dabei eine im wesentlichen zylinderförmige Oberfläche, während die Andruckrollen 11 eine abgerundete Oberfläche haben, die mehrere übereinander zugeführte Materialbahnen 20 in die Ausnehmung 8 hineindrücken. Zwischen den Rollen 11 befinden sich dabei Schleifscheiben 12, die die Oberfläche planschleifen, so daß die Enden der Materialbahnen 20 nicht mehr über die Oberfläche des Packstückes 4 hinausragen. Anschließend werden dann die Packstücke 4 mit einem Messer 7 auf die gewünschte Länge abgeschnitten und abgetrennt.

Bei der Zuführung der Bahnen 20 können zwei benachbarte Bahnen jeweils unterschiedliche Farbe haben, wie dies in den Fig. 12 und 13 durch unterschiedliche Schraffierung angedeutet ist.

## Patentansprüche

1. Packstück aus Kunststoffmaterial für Leitungsdurchführungen durch Wandöffnungen, das zwei Packstückteile (4) mit einer auf der zum jeweils anderen Packstückteil (4) gerichteten Seite angeordneten halbzylinderförmigen Ausnehmung (8) aufweist, wobei im von diesen Ausnehmungen (8) gebildeten Raum ein aus mindestens einem Stück bestehendes zylinderförmiges Packstückteil (1) mit wesentlich geringerem Durchmesser als jener der halbzylinderförmigen Ausnehmungen (8) angeordnet ist und der restliche Raum von einem Hohlzylinder ausgefüllt ist, der in Längsrichtung in zwei im wesentlichen gleiche Hohl-Halbzylinder (6) geteilt ist, die aus mehreren voneinander lösbaren Schichten bestehen, dadurch gekennzeichnet, daß die Schichten aufeinanderliegen und unterschiedliche Farbe haben.

2. Packstück nach Anspruch 1, dadurch gekennzeichnet, daß der Hohlzylinder (6) aus einem aufgewickelten Materialbahnabschnitt (2) besteht.

3. Packstück nach Anspruch 2, dadurch gekennzeichnet, daß Anfangs- und Endkante (3) des Materialbahnabschnitts (2) zickzackförmig sind.

4. Packstück nach einem der Ansprüche 1 bis 3, dadurch gekennzeichnet, daß die Schichten des Hohlzylinders (6) eine Dicke von ungefähr 0,5 bis 2 mm haben.

5. Packstück nach einem der Ansprüche 1 bis 4, dadurch gekennzeichnet, daß es eine Länge von ungefähr 50 bis 70 mm hat.

6. Packstück nach einem der Ansprüche 1 bis 5, dadurch gekennzeichnet, daß das Kunststoffmaterial ein Elastomer, insbesondere EPDM ist.

7. Packstück nach einem der Ansprüche 1 bis 6, dadurch gekennzeichnet, daß das Kunststoffmaterial Beimengungen von Olefinen aufweist.

8. Packstück nach einem der Ansprüche 1 bis 7, dadurch gekennzeichnet, daß die äußeren Packstückteile (4) und der zylinderförmige Packstückteil (1) eine größere Shorehärte als der Materialbahnabschnitt aufweisen.

9. Packstück nach einem der Ansprüche 1 bis 8, dadurch gekennzeichnet, daß die äußeren Packstückteile (4) und der zylinderförmige Packstückteil (1) eine Shorehärte von ungefähr 60° bis 100°, vorzugsweise ungefähr 80° aufweisen.

10. Packstück nach einem der Ansprüche 1 bis 9, dadurch gekennzeichnet, daß die Materialbahnabschnitte (2) eine Shorehärte von ungefähr 40° bis 80°, vorzugsweise 60° aufweisen.

11. Packstück nach einem der Ansprüche 1 bis 10, dadurch gekennzeichnet, daß es quadratischen Querschnitt hat.

12. Packstück nach Anspruch 11, dadurch gekennzeichnet, daß der Durchmesser des zylinderförmigen Packstückteils (1) ungefähr 15 bis 30 % der Seitenlänge des Quadrats beträgt.

13. Packstück nach einem der Ansprüche 1 bis 12, dadurch gekennzeichnet, daß die Wanddicke des hohlzylinderförmigen Packstückteils (6) ungefähr 15 bis 25 % der Seitenlänge des Quadrats beträgt.

14. Packstück nach einem der Ansprüche 1 bis 13, dadurch gekennzeichnet, daß der Durchmesser des zylinderförmigen Packstückteils (1) ungefähr 18 bis 25 % und die Wanddicke des hohlzylinderförmigen Packstückteils (6) ungefähr 18 bis 22 % der Seitenlänge des Quadrats beträgt.

15. Packstück nach einem der Ansprüche 1 bis 10, dadurch gekennzeichnet, daß es runden, ovalen oder rechteckigen Querschnitt aufweist.

## Claims

1. A packing member of plastics material for line bushings through wall openings, which has two packing member parts (4) with a semicylindrical recess (8) disposed on the side directed respectively towards the other packing member part (4), wherein in the space formed by these recesses (8) there is disposed a cylindrical packing member part (1) which comprises at least one member and which is of substantially smaller diameter than that of the semicylindrical recess (8), and the remaining space is filled by a hollow cylinder which in the longitudinal direction is divided into two substantially equal hollow semicylinders (6) which consist of a plurality of layers which can be detached from one another, characterised in that the layers are disposed one on top of the other and have different colours.

2. A packing member according to Claim 1, characterised in that the hollow cylinder (6) comprises a rolled-up portion of material sheet (2).

3. A packing member according to Claim 2, characterised in that the starting and end edges (3) of the portion of material sheet (2) are zigzag-shaped.

4. A packing member according to any one of Claims 1 to 3, characterised in that the layers of the hollow cylinder (6) have a thickness of approximately 0.5 to 2 mm.

5. A packing member according to any one of Claims 1 to 4, characterised in that it has a length of approximately 50 to 70 mm.

6. A packing member according to any one of Claims 1 to 5, characterised in that the plastics material is an elastomer, in particular EPDM.

7. A packing member according to any one of Claims 1 to 6, characterised in that the plastics material has additions of olefins.

8. A packing member according to any one of Claims 1 to 7, characterised in that the outer packing member parts (4) and the cylindrical packing member part (1) have a higher Shore hardness than the portion of material sheet.

9. A packing member according to any one of Claims 1 to 8, characterised in that the outer packing member parts (4) and the cylindrical packing member part (1) have a Shore hardness of approximately 60° to 100°, preferably approximately 80°.

10. A packing member according to any one of Claims 1 to 9, characterised in that the portions of material sheet (2) have a Shore hardness of approximately 40° to 80°, preferably 60°.

11. A packing member according to any one of Claims 1 to 10, characterised in that it is of square cross-section.

12. A packing member according to Claim 11, characterised in that the diameter of the cylindrical packing member part (1) is approximately 15 to 30 % of the side length of the square.

13. A packing member according to any one of Claims 1 to 12, characterised in that the wall thickness of the hollow cylindrical packing member part (6) is approximately 15 to 25 % of the side length of the square.

14. A packing member according to any one of Claims 1 to 13, characterised in that the diameter of the cylindrical packing member part (1) is approximately 18 to 25 % and the wall thickness of the hollow cylindrical packing member part (6) is approximately 18 to 22 % of the side length of the square.

15. A packing member according to any one of Claims 1 to 10, characterised in that it is of circular, oval or rectangular cross-section.

## Revendications

1. Pièce de bourrage en matière plastique pour traversées de conduites à travers des ouvertures pratiquées dans les murs, comprenant deux éléments (4) de pièce de bourrage qui présentent chacun un logement demi-cylindrique (8) situé du côté dirigé vers l'autre élément (4) de pièce de bourrage, un élément cylindrique (1) de pièce de bourrage, qui est constitué par une pièce au moins et qui a un diamètre beaucoup plus petit que celui des logements demi-cylindriques (8), étant disposé dans l'espace formé par ces logements (8), et l'espace restant étant rempli par un cylindre creux qui est divisé en direction longitudinale en deux demi-cylindres creux (6) pratiquement identiques qui se composent de plusieurs couches détachables entre elles, caractérisée en ce que les couches sont superposées et ont des couleurs différentes.

2. Pièce de bourrage selon la revendication 1, caractérisée en ce que le cylindre creux (6) est constitué par un morceau (2) de bande de matière qui est enroulé.

3. Pièce de bourrage selon la revendication 2, caractérisée en ce que le bord initial et le bord final (3) du morceau (2) de bande de matière sont découpés en zigzag.

4. Pièce de bourrage selon l'une quelconque des revendications 1 à 3, caractérisée en ce que les couches du cylindre creux (6) ont une épaisseur de l'ordre de 0,5 a 2 mm.

5. Pièce de bourrage selon l'une quelconque des revendications 1 à 4, caractérisée en ce qu'elle a une longueur de l'ordre de 50 à 70 mm.

6. Pièce de bourrage selon l'une quelconque des revendications 1 à 5, caractérisée en ce que la matière plastique est un élastomère, en particulier un EPDM.

7. Pièce de bourrage selon l'une quelconque des revendications 1 à 6, caractérisée en ce que la matière plastique comporte des additions d'oléfines.

8. Pièce de bourrage selon l'une quelconque des revendications 1 à 7, caractérisée en ce que les éléments extérieurs (4) de pièce de bourrage et l'élément cylindrique (1) de pièce de bourrage ont une dureté Shore plus élevée que le morceau de bande de matière.

9. Pièce de bourrage selon l'une quelconque des revendications 1 à 8, caractérisée en ce que les éléments extérieurs (4) de pièce de bourrage et l'élément cylindrique (1) de pièce de bourrage ont une dureté Shore de l'ordre de 60° à 100°, de préférence de l'ordre de 80°.

10. Pièce de bourrage selon l'une quelconque des revendications 1 à 9, caractérisée en ce que les morceaux (2) de bande de matière ont une dureté Shore de l'ordre de 40° à 80°, de préférence de 60°.

11. Pièce de bourrage selon l'une quelconque des revendications 1 à 10, caractérisée en ce qu'elle a une section transversale carrée.

12. Pièce de bourrage selon la revendication 11, caractérisée en ce que le diamètre de l'élément cylindrique (1) de pièce de bourrage est de l'ordre de 15 à 30% de la longueur du côté du carré.

13. Pièce de bourrage selon l'une quelconque des revendications 1 à 12, caractérisée en ce que l'épaisseur de paroi de l'élément cylindrique creux (6) de pièce de bourrage est de l'ordre de 15 à 25% de la longueur du côté du carré.

14. Pièce de bourrage selon l'une quelconque des revendications 1 à 13, caractérisée en ce que le diamètre de l'élément cylindrique (1) de pièce de bourrage est de l'ordre de 18 à 25% de la longueur du côté du carré et l'épaisseur de paroi de l'élément cylindrique creux (6) de pièce de bourrage est de l'ordre de 18 à 22% de cette longueur.

15. Pièce de bourrage selon l'une quelconque des revendications 1 à 10, caractérisée en ce qu'elle présente une section transversale ronde, ovale ou rectangulaire.
